# EUROPÄISCHE PATENTSCHRIFT

(11) **EP 1 396 188 B1**
(45) Veröffentlichungstag und Bekanntmachung des Hinweises auf die Patenterteilung: **12.03.2008**
(21) Anmeldenummer: 03019238.9
(22) Anmeldetag: 26.08.2003
(51) Int. Cl.: A01K 29/00

(54) **Verfahren zur Überwachung von Schweinen**
Method for monitoring pigs
Méthode pour surveiller des porcs

(30) Priorität: 26.08.2002 DE 10239674
(43) Veröffentlichungstag der Anmeldung: 10.03.2004
(73) Patentinhaber: Hölscher & Leuschner GmbH & Co., 48488 Emsbüren (DE)
(72) Erfinder: Leuschner, Peter, 48488 Emsbüren (DE)
(74) Vertreter: Bünemann, Egon

(56) Entgegenhaltungen:
- WO-A-00/38502
- DE-A1- 19 918 100
- US-A- 5 412 420
- US-A- 5 644 643
- DATABASE WPI Section EI, Week 200267 Derwent Publications Ltd., London, GB; Class S02, AN 2002-624635 XP002342185 & KR 2002 024 688 A (LEE D W) 1. April 2002 (2002-04-01)

## Beschreibung

Die Erfindung betrifft ein Verfahren zur Überwachung von Schweinen nach dem Oberbegriff des Anspruchs 1. Solche Überwachungsverfahren sind in der Praxis insbesondere bei der Überwachung auf Vermarktungsreife zu den herkömmlichen, im allgemeinen sehr umständlichen Wägungen hinzu oder sogar an deren Stelle getreten, wobei etwa ein Mastschwein von oben in seinen Konturen erfaßt und direkt unter Ausnutzung des natürlichen Verlaufs der Körperkontur etwa bei den Ansätzen zwischen Hals und Vorderschenkeln, zwischen Vorderschenkeln und Bauch und zwischen Bauch und Hinterschenkeln sowie am Abschluß gegliedert und meßtechnisch erfaßt wird, um auf eine sehr viel schnellere, einfachere und bequemere Weise das Gesamtgewicht eines Mastschweins zu kalkulieren. Eine solche Vermessung hat sich etwa in Form einer optischen Vermessung als recht zuverlässig erwiesen. Es versteht sich, daß neben der Gewichtsmessung und der optischen Vermessung auch andere meßtechnische Erfassungen eines Schweins denkbar sind, um beispielsweise das Gesamtgewicht zu ermitteln.

In dieser Hinsicht ist aus der DE 199 18 100 A1 eine Vorrichtung zur berührungslosen Gewichtsermittlung von lebenden Tieren, insbesondere von Schweinen in ihrer Haltungsumwelt zu entnehmen, bei der eine Vorrichtung als Bilderfassungs- und Meßapparatur aus einer Videokamera und einem Abstandssensor für den Abstand zwischen Kamera und Tier sowie einem Lichtzeiger zur optischen Markierung der Bildmitte ein Bild des Tieres von oben liefert, welches dann in einem Mikrocomputer zur Bildanalyse und Korrelationsrechnung ausgewertet wird. Wie diese Bildauswertung zielt auf eine Erfassung der Körpermasse des Tieres, etwa des Schweines, insgesamt.

Aus der WO 00/38502 ist eine karussellartige Fütterungseinrichtung zur individuellen Fütterung von in Herden gehaltenen Schweinen bekannt, die vor dem Eintritt in das Fütterungskarussell in einer Schleuse in bezug auf ihre Identität, daß Gesamtgewicht, die Körpertemperatur u.dgl. überprüft werden, um daraufhin die Futtermenge oder überhaupt den Zutritt zum Karussell bzw. zu einer Aussonderung über einen Seitenweg vorzugeben.

Zu einer Entscheidung über die Vermarktungsreife von Schweinen wird neben einer eigenständigen Messung der rückenseitigen Speckschicht des Schweins und der täglichen Gewichtszunahme anhand der Gewichtswägung, in Relation gesetzt zum Futteraufwand, insbesondere die Gewichtswägung insgesamt vorgeschlagen.

Auf der anderen Seite zeigt sich allerdings, daß das Gesamtgewicht eines Schweins nur bedingt aussagekräftig für eine Entscheidung über Vermarktungsreife ist, da es wertmäßig sehr unterschiedliche Bereiche umfaßt. Dies gilt nicht nur für Abfall und Knochen, sondern auch für die Fleischbereiche, bei denen vor allem der Schinkenbereich und der Lachsbereich gegenüber sonstigen Bereichen dominieren und danach noch Schulter- und Bauchbereiche, letztere insbesondere mit dem Muskelfleischanteil, von Bedeutung sind. Darüber hinaus kann zeitlich bei einer fortlaufenden Überwachung des Gesamtgewichts eine Zunahme festzustellen sein, die die aufgewanden Mastkosten zu rechtfertigen scheint. Wenn diese Zunahme allerdings nur in geringwertigen Fleischbereichen eintritt, ist der Mastaufwand nicht wirklich gerechtfertigt.

Aufgabe der Erfindung ist es dementsprechend, ein Überwachungsverfahren zu erzielen, bei dem nicht einfach ein das Gesamtgewicht des Masttieres erfassendes Bewertungsergebnis, sondern beispielsweise ein der Vermarktungsmöglichkeit wertmäßig Rechnung tragendes Ergebnisses erzielt wird, ohne das der Überwachungsaufwand und der gerätetechnische Aufwand dabei einschneidend zu erhöhen ist. Ein solches Überwachungsverfahren soll aber auch über die Vermarktungsentscheidung und den Bereich der Mastschweine hinaus Hilfestellung bei der Aufzucht und Fütterung von Sauen, Ferkeln oder Ebern geben und dabei den Zuchtverlauf und Zuchterfolg mit geringem Arbeitsaufwand und hoher Zuverlässigkeit zu überwachen helfen.

Gemäß der Erfindung wird diese Aufgabe von dem Oberbegriff des Anspruchs 1 ausgehend durch die kennzeichnenden Merkmale dieses Anspruchs gelöst.

Es hat sich gezeigt, daß die Körpermeßwerte, wie sie grundsätzlich schon für die Ermittlung des Gesamtgewichts meßtechnisch erfaßt und insbesondere rechnerisch ausgewertet wurden, durchaus zu einer marktgerechten Bewertung des Schweins verhelfen können, in dem diese Meßwerte mit einer entsprechenden Gewichtung in der Verknüpfung versehen werden. Es hat sich sogar gezeigt, daß sich die Meßerfassung- und Bewertung dadurch gegebenenfalls vereinfachen läßt.

Im einfachsten Fall kann man dem Schinkenbereich des Schweins eine Schlüsselbedeutung zuschreiben, aufgrund derer es darauf ankommt, den Bereich der Hinterbeinschenkel zu erfassen. Dies kann selbst dann ausreichen, wenn dem Lachs gleichfalls eine hohe Gewichtung zukommt, da im Bereich vieler Schweinerassen eine enge Korrelation zwischen Lachs und Schinken im Gewicht besteht.

Auf der gleichen Linie kann durch wiederholte Messungen in zeitlicher Folge eine kostengerechte Entscheidung zwischen Vermarktung und kurz- oder langfristiger Weitermast getroffen werden, da die Gewichtung der Meßwerte eine Überwachung auf die bei der Vermarktung im Vordergrund stehenden Bereiche ausgerichtet ist. Eine Mast, die zu einer Zunahme in geringwertigen Bereichen des Masttieres führt, läßt sich damit zeitgerecht abbrechen, auch wenn das Masttier etwa vom Gesamtgewicht noch unvollendet erscheinen würde.

Letztlich ist allerdings das Überwachungsergebnis bei der Marktreife-Überwachung von Mastschweinen nur ein typisches Beispiel für die gewichtete Erfassung und Auswertung der Körperbereiche. Ebenso können bei der Aufzucht von Ferkeln oder Sauen oder auch Ebern in ganz entsprechender Weise Zuchtziele und Fütterungsziele auf das Erreichen hin überwacht werden. Noch wesentlicher erscheint, daß eine laufende Überwachung von Schweinen in einem Stall, insbesondere auch in einem Stall zur Großgruppenhaltung, ständig bzw. in kurzen Zeitabschnitten wiederkehrend unproblematisch überwacht werden können, um das Erreichen von vorgegebenen Zwischenergebnissen bei der Aufzucht oder Mast festzustellen bzw. dann oder gerade andernfalls das Tier in besondere Fütterungsbereiche zu steuern. So können dann Schweine einzeln oder in vorgegebenen Gruppen nach einer gezielten Fütterung und Behandlung zugeführt werden, wenn diese etwa nach Erreichen eines vorgegebenen Mastzustandes nicht mehr in der Lage sind, anspruchsvolles Mastfutter zu verwerten oder wenn diese aufgrund einer noch mangelhaften Entwicklung gerade mit von besonderem Mastfutter profitieren können.

Die optische Überwachung ist sogar in der Lage, in Verbindung mit einer gewichteten Erfassung der Körpermeßwerte eine Identifizierung von Schweinen in einer Großgruppenhaltung vorzunehmen und mit Hilfe dieser Identifizierung das gesamte Verhalten des Schweins in ganz wesentlichen Einzelheiten zu erfassen. Wird beispielsweise dann ein Schwein in einer Großgruppenhaltung mit einem Liege- und Aufenthaltsbereich, zumindest einer Fütterungsstation mit Einweg-Zugang über eine als Schleuse Überwachungsstation meßtechnisch erfaßt, dann ist nicht nur das Gewicht bzw. die Ausbildung von marktgängigen Fleischpartien von Interesse, sondern auch die Häufigkeit, mit der das Schwein in den Fütterungsbereich hineinläuft. Dabei kann insbesondere im Bereich einer solchen Schleuse anhand weiterer, meßtechnischer erfaßter Symptome wie etwa der berührungslos zu messenden Körper- oder Hauttemperatur oder der von außen ermittelbaren Fettschichten oder das Atemverhalten, insbesondere in Form von "hecheln", ein etwaiges gesundheitliches Problem des Tieres erkannt werden. Wenn dann die Überwachung eine Schleuse herkömmlicher Art mit einer hinreichenden Zahl von Ausgängen gesteuert, kann ein solches Tier gleich separiert werden. In jedem Fall ist aber die Überwachung in der Lage, das Tier und seinen Zustand entsprechend zu vermerken und anzuzeigen, so daß diesen Anzeigen bedarfsgerecht nachgegangen werden kann.

Ein Ausführungsbeispiel der Erfindung wird anhand der - schematisierten - Zeichnung veranschaulicht und nachfolgend näher erläutert. In der Zeichnung zeigen:
- Fig. 1,: Seitenansicht eines Schweins unter einer Kameraanordnung
- Fig. 2: Meßbild zu dem Schwein nach Fig. 1 für eine opto-elektronische Auswertung und
- Fig. 3: Schweinestall für eine Großgruppenhaltung in Teildraufsicht.

Ein in der Zeichnung dargestelltes Schwein 1 ist beispielsweise auf seine Vermarktungsreife hin zu überwachen. Die Vermarktungsreife ist üblicherweise die Schlachtreife, auch wenn eine Überwachung von Schweinen und anderen Masttieren auf die hier betrachtete Weise grundsätzlich auch in Zwischenstadien der Aufzucht und der Mast denkbar ist.

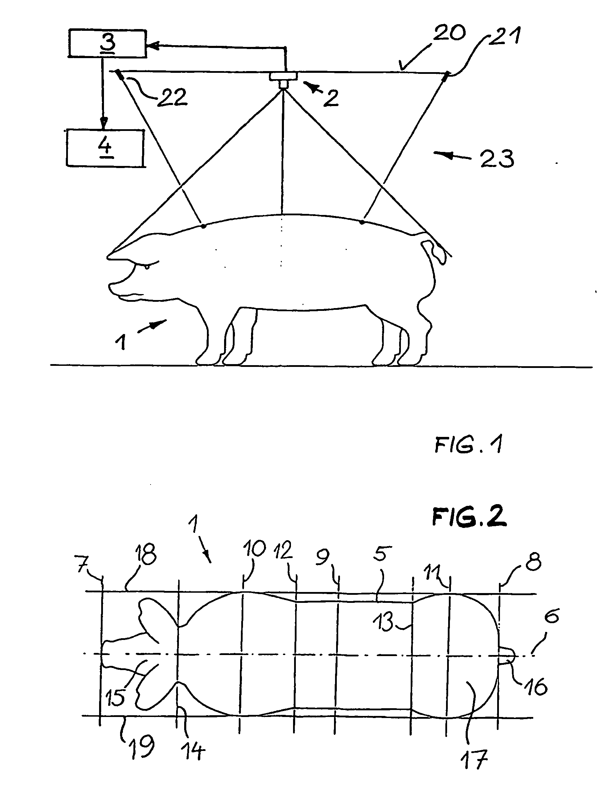

Traditionelle Überwachungen dieser Art durch eventuell grobe oder unsichere Schätzung und durch regelmäßige umständliche Wägung sind inzwischen teilweise durch technische Meßverfahren abgelöst. So kann ein Schwein gemäß Fig. 1 durch eine (Digital-) Kamera 2 von oben erfaßt werden, um das darin erzeugte Bild einer Auswertung 3 zuzuführen, die aufgrund der Überwachung ein Steuersignal an eine Ausgabeeinrichtung 4 abgibt.

Die Ausgabeeinrichtung 4 kann im einfachsten Fall in einer Anzeigeeinrichtung bestehen, ist aber in aller Regel zumindest zusätzlich mit Stellfunktionen verbunden, die beispielsweise eine Kennzeichnung des Schweins auslösen oder aber Pforten für die gezielte Weiterbewegung des Schweins freigeben, durch die das Schwein entweder in einen zur Vermarktung führenden Bereich oder aber zurück in den Mastbereich gelangt, wobei hier noch eine Unterscheidung zwischen langfristiger Mast mit nachfolgenden entsprechenden Überwachungen oder einer befristeten Endmast oder Nachmast möglich ist.

Eine solche Überwachung ist überaus schnell und unproblematisch durchzuführen, da das Schwein nur in eine entsprechende Überwachungsschleuse hinein und aus dieser wieder hinausgetrieben wird oder vielmehr selbst im stetig wiederkehrenden Rundgang durch Schleuse, Fütterungsbereich und Liegebereich durch diese hindurchgelangt, wogegen herkömmliche Wiegevorgänge zeitaufwendig sind.

Die meßtechnische Bewertung kann sogar durch eine bewegliche Überwachungsstation erfolgen, in der dann die Kamera 2, die Auswertung 3 und die Ausgabeeinrichtung 4 mit einem Fahrgestell über das zu überwachende Schwein gebracht werden, wenn etwa ein Schwein oder eine Gruppe von Schweinen am Freßtrog steht. Die Ausgabeeinrichtung ist dann regelmäßig mit einer Kennzeichnung, etwa mit geeigneten Stempeln oder Markierungseinrichtungen versehen, um das Überwachungsergebnis in Bezug auf die Vermarktungsreife direkt am Schwein anzubringen.

Die Überwachungsstation wird aber vorzugsweise stationär als standardisierte, serienmäßig vorgefertigte Einheit ausgeführt, so daß sie im Zusammenhang mit einer Überwachungsschleuse lediglich in bzw. über dieser zu montieren ist. In Fig. 1 ist in Höhe der Kammer 2 lediglich eine Basis 20 für ein Meßsystem angedeutet, die für eine in bekannter Weise vielfältig ausführbare mechanische Haltestruktur steht und die auch die Gerätetechnik für die Auswertung 3 und Ausgabeeinrichtung 4 halten kann.

Über diese Basis 20 sind auch zwei Abstandsmeßsysteme 21 und 22 fest gegenüber der Kamera installiert und gleichfalls von oben auf das Schwein gerichtet, um insbesondere bei geringen Meßabständen Parallaxenfehler zu reduzieren. Es versteht sich, daß eine mit Rücksicht auf den baulichen Aufwand der Überwachungsstation, auf den Montageaufwand, auf die Kamerabedienung und auch auf den Raumhöhenbedarf nicht als zu hoch angesetzte Position der Kamera 2 von z. B. 2 bis 2,50 m mit perspektivischen Verzerrungen verbunden ist, die weitgehend eingerechnet werden können. Bedenklich ist allerdings, daß beispielsweise in hochbeiniges Schwein, das auch mit dem Rücken der Kamera angenähert ist, aufgrund dieses geringeren Abstandes vergrößerte Abmessungen ergibt. Die Höhenmeßsysteme 21 und 22 überwachen die vertikalen Abstände, so daß die Kameraposition danach etwa in der Höhe auf einen vorgegebenen Abstand zum Schweinerücken gesteuert wird oder aber die Abstandsmessung rechnerisch in die elektronische Gewichtung einbezogen wird.

Zweckmäßig ist die Überwachungseinrichtung mit einer eigenen (nicht dargestellten) Beleuchtung ausgestattet, die etwa mit einem genau definierbaren Auflicht störungsfrei und reproduzierbar für ein gut auswertbares Abbild des Schweins sorgt. Die so als bauliche Einheit erstellte Überwachungsstation ist insgesamt mit 23 gekennzeichnet.

In Fig. 2 ist beispielsweise das an der Kamera 2 auch von oben von dem Schwein 1 aufgenommene Bild in Umrissen dargestellt, wie es etwa mit Auflicht hell gegenüber einem dunklen Untergrund erscheint. Die Konturlinie 5 des Schweins 1 wird in der Auswertung mit einem besonderen Computerprogramm ausgewertet. Dabei findet diese Auswertung automatisch zu der Kontur 5 eine Mittellinie 6 für eine vertikale Längs-Mittelebene des Schweins, vordere und hintere Begrenzungslinien 7, 8, eine mittlere Querlinie 9 und dazwischen in jeweils mittleren Schenkelbereichen Querlinien 10, 11 für größte Breiten und dazwischen Querlinien 12, 13, 14 für die Schenkelansätze sowie einen Halsansatz.

Statt der (Außen-) Konturen können mit Hilfe der Beleuchtung und der sich daraus ergebenden "plastischen" fotografischen Wiedergabe auch Zwischenpunkte oder Zwischenlinien erlangt werden, die Zwischenkonturen für Körperrundungen oder auch "Höhenlinien" zur Erfassung charakteristischer Werte liefern und insbesondere auch Aufschluß über die Dimensionen des Tieres in Richtung der fotografischen Aufnahme erbringen.

Ob die sich aus einem solchen möglichen Linienraster ergebenen Abmessungen insgesamt oder nur teilweise ermittelt werden, hängt von dem Computerprogramm der Auswertung ab. In der Regel ist mit einem vergleichsweise kleinen Teil der Linien und Abmessungen auszukommen.

Dies gilt insbesondere für eine gewichtete Auswertung, bei der etwa dem Schinkenbereich die maßgebliche Bedeutung zukommt. Meßtechnische Auswertungen ungewichteter Art sind schon herkömmlich zur Ermittlung des Gesamtgewichts eines Schweins geschaffen worden. Dabei sind dann allerdings alle Körperbereiche von einem Kopf 15 bis zu einem Schwanz 16 von gleichwertiger Bedeutung und dementsprechend zu berücksichtigen.

Eine gewichtete Überwachung und Bewertung der hier betrachteten Art führt nicht unbedingt zu einer Komplizierung des Auswerteverfahrens. Es kann sogar erhebliche Vereinfachungen ergeben. Wenn nämlich beim Schwein einem Schinkenbereich 16 eine herausragende Bedeutung zukommt, kann es für die Vermarktungsentscheidung ausreichen, einen groben Anhalt für das Gesamtgewicht etwa mit den Abständen zwischen den End- und Querlinien 7 und 8 und seitlichen Längsbegrenzungslinien 18 und 19 nur zu erfassen, um - im allgemeinen unkritisch- sicherzustellen, daß eine untere Gewichtsgrenze von z. B. 75 Kilo Schlachtgewicht überschritten ist. Die eigentlichen Meßergebnisse und deren Gewichtung kann sich dann aber auf den Schinkenbereich 16 konzentrieren mit einer Vermessung in Querrichtung etwa auf der Linie 11 und in Längsrichtung zwischen den Linien 8 und 13. Die optische Vermessung ist dann mit einem Umrechnungsfaktor für die Körpergeometrie, nunmehr nicht auf die Gesamtgewichtsanteile, sondern nur auf den Schinkenbereich und mit einer Gewichtung für den Schinkenwert zu versehen. Dies gilt nach den modernen Bewertungsmethoden für ein (geschlachtetes) Schwein jedenfalls auch dann, wenn der Lachsbereich beim Schwein annähernd so hoch wie der Schinkenbereich zu bewerten ist, dieser aber jedenfalls innerhalb einer Schweinerasse in einer festen Relation zum Schinkenbereich steht.

Ebenso kann es zur Identifizierung eines Schweines (Ferkel, Mastschwein, Sau, Eber) ausreichen, kennzeichnende Meßwerte mit besonderer Gewichtung zu erfassen, um daneben etwa das Gesamtwachstum zu messen.

Insgesamt ist es aber für die Auswertung nicht entscheidend, daß Vereinfachungen erzielt werden. Ein Auswerteprogramm, welches die Kontur eines Schweins erfaßt und geometrisch gliedert, ist auch zu einer komplexeren Auswertung in der Lage, bei der die einzelnen Bereiche des Scheins nicht nur mit Ihrem Beitrag für das Gesamtgewicht, sondern insbesondere mit Ihrem Beitrag zum Vermarktungswert einzustufen sind.

Die Überwachung hat nicht nur den Charakter einer "Endabnahme", sondern dient auch der Entscheidung über die Weitermast. Wenn sich dabei zeigt, daß ein Schwein zwar noch nicht ein "ideales" Schinkengewicht von vorzugsweise rund 19 Kilo erreicht hat, als Masterfolg jedoch keine Zunahme des Schinkengewichts, allenfalls eine Gesamtgewichtszunahme zeigt, stellt sich eine Weitermast als nicht erfolgversprechend dar. Ein solches Schwein ist zu vermarkten. Das gleiche gilt dann, wenn das Vermarktungsergebnis, am Schinkengewicht etwa zu beurteilen, in keinem günstigen Verhältnis zum weiteren Mastaufwand steht, wobei die für Schweinefleisch und insbesondere für Schinken zu erzielenden Marktpreise einerseits und die Futterpreise andererseits in das Programm einzugeben sind.

Die Vermarktungsentscheidung ist allerdings nicht die einzige Anwendbarkeit einer solchen Überwachungsstation. Die genaue Erfassung des Schweins mit den dargestellten meßtechnischen Mitteln und die Gewichtung der Meßwerte erlauben es, Schweine in jeglichen Aufzuchtstadien zu überwachen, um diese dann bei Erreichen von Aufzuchtergebnissen in eine andere Aufzuchtstufe zu überführen oder um zurückgebliebene Schweine mit besonderen Fütterungsverfahren zu fördern oder aber auszusortieren.

Es hat sich gezeigt, daß diese meßtechnische Erfassung sogar dazu geeignet ist, das einzelne Schwein zu identifizieren und damit durch wiederkehrende Überwachungen die Entwicklung bzw. den Konditionszustand des einzelnen Schweins festzustellen. Wachstumsschübe, Masterfolge oder auch deren Ausbleiben sind damit überwachbar und registrierbar. Wesentlich ist es, statt einer elementaren (geometrischen) Erfassung des Schweins gewichtete Meßwerte mit den entscheidenden Merkmalen herauszuziehen und zu verwerten. Die Überwachung würde allerdings in herkömmlicher Weise nicht verwendbar sein. Sowohl bei der Überprüfung von Mastergebnissen wie bei der Wachstumskontrolle und insbesondere bei der Identifizierung der Tiere ist eine letztlich auf das Gesamtkörpervolumen ausgerichtete Erfassung wenig hilfreich. Es bedarf einer besonderen Gewichtung der für den Masterfolg, den Wachstumsstand und die Erkennung wesentlichen Körpermaße.

Die Überwachung liefert damit auch Hinweise auf eine eventuelle Fehlernährung oder etwa eine krankheitsbedingte Entwicklungsstörung. Insbesondere wenn ein Tier einen normalen Entwicklungsverlauf über vorgebare Toleranzen hinaus verläßt, kann dieses im Rahmen der Überwachung gemeldet werden. Eine solche Überwachungsstation kann dann mit Kennzeichnungsvorrichtungen zum Auffinden des Tieres versehen sein. Es ist aber auch möglich, direkt besondere Stallpassagen zur Aussonderung zu steuern.

Es versteht sich, daß die meßtechnische Erfassung des Schweins mit einer Digitalkamera nur eine von verschiedenen technischen Möglichkeiten der Vermessung ist. Andere - mechanische, elektromagnetische oder schalltechnische - Meßverfahren lassen sich grundsätzlich anwenden, soweit sie ein repräsentatives Meßmodell für die Auswertung liefern.

Die Überwachungsstation 23 kann auch mit weiteren Überwachungsmitteln versehen sein, etwa einer Temperaturmessung, insbesondere nach einer berührungslosen Temperaturmessung der Hautoberfläche des Tieres, um etwa fiebrige Erscheinungen zu bemerken und auszuwerten. Ebenso kann innerhalb einer Schleuse eine Überwachung der Atemfrequenz etwa auf ein als Krankheitssymptom zu wertendes Hecheln vorgesehen sein. Auch das allgemeine Bewegungsverhalten des Tieres, das sich schon an der Passierfrequenz einer solchen Schleuse in einem Schweinestall ablesen läßt, ist indikativ für das Befinden des Schweins.

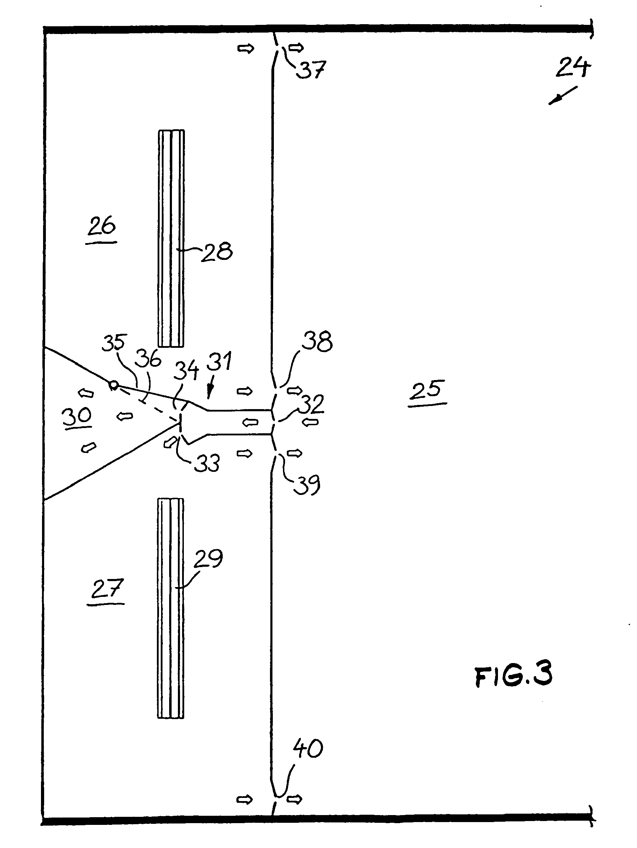

In Fig. 3 ist schematisch in der Draufsicht ein Schweinestall (Bereich) 24 für eine Großgruppenhaltung von Schweinen dargestellt, die einen allgemeinen und gemeinschaftlichen Aufenthalts- und Liegebereich 25 vorfinden, aus dem sie jeweils in einen von zwei Fütterungsbereichen 26, 27 mit Fütterungseinrichtungen (Trögen und Tränken) 28 bzw. 29 oder aber in einen Selektionsbereich 30 hineingelangen können, die beispielsweise durch Trenngatter abgegrenzt sind.

Der Zugang zu den unterschiedlichen Bereichen wird in einer Schleuse 31 bestimmt, in die die Schweine nur in einer fest vorgegebenen Richtung vom Liegebereich 25 durch eine Pforte 32 hineingelangen, ohne dann wieder durch dieselbe Pforte zurückkehren zu können. Die Schleuse 31, die jeweils nur ein Tier aufzunehmen vermag, ist auf der anderen Seite mit Einwegpforten 33 und 34 versehen, die lediglich einen Auslaß aus der Schleuse bilden und dann in der dargestellten Weise in den Fütterungsbereich 27 oder in den Selektionsbereich 30 hineinführen.

Im vorliegenden Fall hat der Selektionsbereich 30, eingegrenzt durch Trenngatter, in einem an die Schleuse 31 anstoßenden Gatterbereich ein Schwenkgatter 35, welches in die in gebrochenen Linie dargestellte Gatterposition 36 verschenkbar ist und dann den Zugang von der Pforte 34 zum Selektionsbereich 30 ausgrenzt. Die Tiere werden also von der Pforte 34 dann in den Fütterungsbereich 26 geleitet. Das Schenkgatter 35-36 ist nur ein Bespiel für die gesteuerte und kanalisierte Weggestaltung aus der Schleuse 31 heraus.

Solche Fütterungsbereiche können natürlich vervielfacht und differenziert werden bis hin zu Einzelfütterungsbereichen, in denen gegebenenfalls sogar ein bestimmtes Tier eine bestimmte, nach Art und Menge genau vorgegebene Futterportion erhält.

Von den Fütterungsbereichen 26 und 27 finden die Tiere an den Fütterungsstellen 28 bzw. 29, bei denen sie dann üblicherweise Nahrung und Flüssigkeit aufnehmen, ihren Weg durch Einwegpforten 37, 38, 39 oder 40 zurück in den Liegebereich 25, aus dem sie allerdings nur wieder durch die Schleuse 31 hindurch zu den Fütterungen bzw. in den Selektionsbereich 30 zurückgelangen können.

Erfahrungsgemäß nimmt jedes Tier mehrmals, drei bis fünf Mal am Tag Nahrung auf und findet dann auch den Weg zu einer der Fütterungen durch die Schleuse 31 hindurch, aus der es zu der einen oder anderen der Fütterungen 28, 29 geleitet wird. Die Schleuse ist mit der Überwachungsstation 23 ausgestattet, bei der das Tier meßtechnisch erfaßt wird, so daß die gewichtete Auswertung eine Entscheidung erlaubt, zu welcher der Fütterungen das Tier gehen soll. Die Fütterungen sind dementsprechend je nach unterschiedlichem Maß- oder Wachstumsbedarf des Tiers unterschiedlich mit Futter beschickt. Ebenso können vermarktungsreife Tiere oder in anderen Fällen kranke oder behandlungsbedürftige Tiere in den Selektionsbereich 30 gelenkt werden. Gleichzeitig ergibt sich aus der meßtechnischen Erfassung der Überwachungsstation, welche aktuellen Daten für sich und im Vergleich zu den früher erfaßten Daten dem Tier zuzuordnen sind.

## Patentansprüche

1. Verfahren zur Überwachung von Schweinen (1) mit Hilfe einer mit einem optischen Erfassungssystem (2, 21, 22) versehenen Überwachungsstation (23), die vorgegebene Körpermeßwerte eines in der Überwachungsstation (23) stehenden einzelnen Schweins (1) für vorgegebene charakteristische Körperbereiche erfaßt und in eine Datenverarbeitung (3) eingibt, in der die Körpermeßwerte gewichtet und ausgewertet werden, **dadurch gekennzeichnet, daß** die Körpermeßwerte mit einer vom Einfluß auf das Gesamtkörpergewicht abweichenden und dem Verkaufserlös unterschiedlicher Fleischbereiche entsprechenden Gewichtung in der Datenverarbeitung bewertet werden.

2. Verfahren nach Anspruch 1, **dadurch gekennzeichnet, daß** aufgrund der Auswertung der Körpermeßwerte in der Datenverarbeitung (3) ein wahlweise unter mehreren Ausgängen (33, 34) aufzusteuernder Ausgang der als Schleuse (31) ausgebildeten Überwachungsstation (23) aufgesteuert wird.

3. Verfahren nach Anspruch 2, **dadurch gekennzeichnet, daß** das Bewertungsergebnis einen Ausgang für die Schweine (1) in einen Weitermastbereich (26, 27) bzw. einen Vermarktungsbereich (30) aufsteuert.

4. Verfahren nach Anspruch 3, **dadurch gekennzeichnet, daß** in der Datenverarbeitung (3) das jeweils überwachte Schwein (1) anhand der Körpermeßwerte identifiziert und registriert wird.

5. Verfahren nach einem der Ansprüche 1 bis 4, **dadurch gekennzeichnet, daß** die zeitlichen Änderungen des Bewertungsergebnisses gemäß wiederkehrenden Registrierungen gegenüber dem jeweiligen Mastaufwand aufgewogen werden.

6. Verfahren nach einem der Ansprüche 1 bis 5, **dadurch gekennzeichnet, daß** das Schwein (1) mit einer Kennzeichnung nach dem Bewertungsergebnis versehen wird.

7. Verfahren nach einem der Ansprüche 1 bis 6, **dadurch gekennzeichnet, daß** das optische Erfassungssystem (2, 21, 22) vertikal nach unten ausgerichtet ist.

8. Verfahren nach Anspruch 7, **dadurch gekennzeichnet, daß** das optische Erfassungssystem mit einer Höhenmessung (21, 22) für das Schwein und einer Ausgleichssteuerung für das optische Erfassungssystem verbunden ist.

9. Verfahren nach einem der Ansprüche 1 bis 8, **dadurch gekennzeichnet, daß** die Schweine in Großgruppenhaltung wiederkehrend Fütterungs- und Liegebereiche (25, 26, 27) durchlaufen können, wobei die Überwachungsstation (23; 31) getrennte Wege zu unterschiedlichen Fütterungsbereichen (26, 27) aufsteuert.

## Claims

1. Method for monitoring pigs (1) with the aid of monitoring station (23) which is equipped with an optical detector system (2, 21, 22), and which records predetermined physical dimensions of an individual pig (1) standing in the monitoring station (23) for predetermined characteristic areas of the body, and inputs them into a data processor (3), in which the physical dimensions are weighted and evaluated,
**characterised in that** the physical dimensions are evaluated in the data processor, with a weighting that diverges from the influence on the total body weight and corresponds to the sales revenue of different meat areas.

2. Method according to claim 1, **characterised in that** on the basis of the evaluation of the physical dimensions in the data processor (3), an exit is opened, which is chosen from amongst several exits (33, 34) of the monitoring station (23) that is designed as a lock (31).

3. Method according to claim 2, **characterised in that** the evaluation result opens an exit for the pigs (1) into a further fattening area (26, 27) or a marketing area (3 0).

4. Method according to claim 3, **characterised in that** the pig (1) that is respectively being monitored is identified and registered in the data processor (3) on the basis of the physical dimensions.

5. Method according to one of the claims 1 to 4, **characterised in that** the changes over time of the evaluation results are weighed up according to recurring registrations in relation to the respective expenditure on feed.

6. Method according to one of the claims 1 to 5, **characterised in that** the pig (1) is given an identification according to the evaluation result.

7. Method according to one of the claims 1 to 6, **characterised in that** the optical detector system (2, 21, 22) is directed vertically downwards.

8. Method according to claim 7, **characterised in that** the optical detector system is connected to a height measurement unit (21, 22) for the pig and a equalisation control unit for the optical detector system.

9. Method according to one of the claims 1 to 8, **characterised in that** the pigs can repeatedly pass through feeding and lying areas (25, 26, 27) in large groups, with the monitoring station (23; 31) opening up separate paths to different feeding areas (26, 27).

## Revendications

1. Procédé pour surveiller des porcs (1) à l'aide d'une station de surveillance (23) équipée d'un système de détection optique (2, 21, 22), qui détecte des valeurs de mesure corporelles prédéterminées d'un porc individuel (1) se trouvant dans la station de surveillance (23) pour des parties du corps caractéristiques prédéterminées, et les introduit dans un traitement de données (3), dans lequel les valeurs de mesure corporelles sont pondérées et exploitées,
**caractérisé en ce que**
les valeurs de mesure corporelles sont exploitées dans le traitement de données avec une pondération s'écartant de l'influence du poids total du corps et correspondant au produit de la vente de différentes parties de la viande.

2. Procédé selon la revendication 1,
**caractérisé en ce que**
sur la base de l'exploitation des valeurs de mesure corporelles dans le traitement de données (3), on commande une sortie, à commander au choix parmi plusieurs sorties (33, 34), de la station de surveillance (23) formant un sas (31).

3. Procédé selon la revendication 2,
**caractérisé en ce que**
le résultat de l'exploitation commande une sortie pour les porcs (1) vers une zone d'engraissement supplémentaire (26, 27) ou vers une zone de commercialisation (30).

4. Procédé selon la revendication 3,
**caractérisé en ce que**
le porc respectivement surveillé (1) est identifié et enregistré dans le traitement de données (3) à l'aide des valeurs de mesure corporelles.

5. Procédé selon l'une quelconque des revendications 1 à 4,
**caractérisé en ce que**
les variations temporelles du résultat de l'exploitation sont estimées selon des enregistrements répétés par rapport à la dépense d'engraissement actuelle.

6. Procédé selon l'une quelconque des revendications 1 à 5,
**caractérisé en ce que**
le porc (1) est pourvu d'une marque d'identification selon le résultat de l'exploitation.

7. Procédé selon l'une quelconque des revendications 1 à 6,
**caractérisé en ce que**
le système de détection optique (2, 21, 22) est dirigé verticalement vers le bas.

8. Procédé selon la revendication 7,
**caractérisé en ce que**
le système de détection optique est relié à une mesure de hauteur (21, 22) pour le porc et à une commande de compensation pour le système de détection optique.

9. Procédé selon l'une quelconque des revendications 1 à 8,
**caractérisé en ce que**
les porcs peuvent circuler en groupes entre des zones d'alimentation et des zones de repos (25, 26, 27) et inversement, et la station de surveillance (23; 31) commande des chemins séparés vers différentes zones d'alimentation (26, 27).
